# EUROPÄISCHE PATENTSCHRIFT

(11) **EP 1 070 754 B1**
(45) Veröffentlichungstag und Bekanntmachung des Hinweises auf die Patenterteilung: **19.03.2008**
(21) Anmeldenummer: 00114379.1
(22) Anmeldetag: 05.07.2000
(51) Int. Cl.: C09K 21/14, C08K 5/5313, C09K 21/12

(54) **Flammschutzmittel-Kombination**
Flame protecting combination
Combinaison pour protection contre les flammes

(30) Priorität: 22.07.1999 DE 19933901
(43) Veröffentlichungstag der Anmeldung: 24.01.2001
(73) Patentinhaber: Clariant Produkte (Deutschland) GmbH, 65929 Frankfurt am Main (DE)
(72) Erfinder: Schlosser, Elke, 86163 Augsburg (DE); Nass, Bernd, 86152 Augsburg (DE); Wanzke, Wolfgang, Dr., 86405 Meitingen (DE)

(56) Entgegenhaltungen:
- WO-A-98/45364
- WO-A-99/02606
- WO-A-99/67326
- DE-A- 4 436 281
- DE-A- 19 614 424
- DE-A- 19 734 437
- DE-A- 19 737 727

## Beschreibung

Die Erfindung betrifft eine neue Flammschutzmittel-Kombination und ihre Verwendung, insbesondere in thermoplastischen Polymeren.

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als z. B. die Alkalimetallsalze (EP-A-0 699 708).

Darüberhinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Trotzdem ist die Wirkung der Kombinationen in einzelnen Thermoplasten noch nicht zufriedenstellend, da z. B. die Klassifizierung V-0 nach dem international gebräuchlichen UL 94 Standard nur mit relativ hohen Zugabemengen oder gar nicht erreicht wird.

Die DE-A-196 14 424 beschreibt eine synergistische Flammschutzmittel-Kombination für thermoplastische Polymere, insbesondere Polyester, enthaltend als Komponente A ein Phosphinsäuresalz der in der dortigen Beschreibung definierten Formel (I) und/oder ein Diphosphinsäuresalz der Formel (II) und/oder deren Polymere, und als Komponente B Stickstoffverbindungen der in der Beschreibung definierten Formeln (III) bis (VIII) oder Gemische hiervon.

Die PCT/WO99/02606 beschreibt flammwidrige Polyster- bzw. Polyamid-Zusammensetzungen, die als Flammschutzmittel eine Kombination aus einem bestimmten Triazinderivat, bevorzugt Melamincyanurat oder Melem, und Trimethylolpropanolester der Methylphosphorigen Säure enthalten.

Die WO99/67326 beschreibt thermoplastische Formmassen, enthaltend A) 5-96% Polyester; B) 1-30% einer Stickstoffverbindung; C) 1-30% einer anorganischen Phosphorverbindung; D) 1-30% einer organischen Phosphorverbindung. Als Komponente B wird bevorzugt Melamincyanurat genannt. Als Komponente C enthalten die Formmassen Phosphinsäuresalze von Erdalkalimetallen, Alkalimetallen, Al, Zn, Fe und Bor. Besonders bevorzugt ist Calciumhypophosphit.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden. Die benötigten Zugabemengen in thermoplastischen Kunststoffen sind jedoch relativ hoch, insbesondere bei glasfaserverstärkten Materialien.

Es ist daher Aufgabe der vorliegenden Erfindung, Flammschutzmittel-Kombinationen zur Verfügung zu stellen, die bereits in geringen Mengen in den entsprechenden Kunststoffen, insbesondere in thermoplastischen Polymeren, eine ausgezeichnete Flammschutzwirkung zeigen.

Gelöst wird diese Aufgabe durch eine Flammschutzmittel-Kombination, enthaltend als Komponente A ein Phosphinsäuresalz der Formel (1) und/oder ein Diphosphinsäuresalz der Formel (11) und/oder deren Polymere, 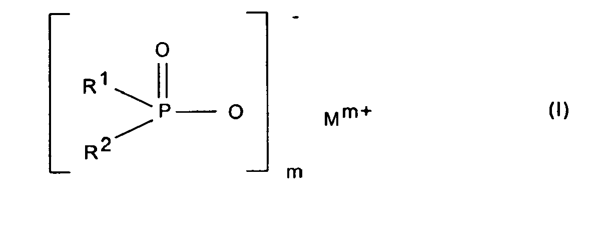 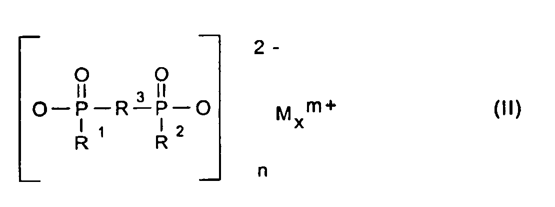 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Calcium-, Magnesium- und/oder Aluminium-Ionen,
- m: 2 oder 3;
- n: 1 oder 3;
- x: 1 oder 2
bedeuten, und als Komponente B Kondensationsprodukte des Melamins und/oder Umsetzungsprodukte des Melamins mit Phosphorsäure und/oder Umsetzungsprodukte von Kondensationsprodukten des Melamins mit Phosphorsäure und/oder Gemische davon, wobei es sich bei den Kondensationsprodukten des Melamins um Melem, Melam, Melon und/oder höherkondensierte Verbindungen davon handelt und es sich bei den Umsetzungsprodukten um Dimelaminpyrophosphat, Melaminpolyphosphat, Melempolyphosphat, Melampolyphosphat und/oder gemischte Polysalze dieses Typs handelt.

Es wurde nun überraschend gefunden, daß die genannten höhermolekularen Melaminderivate bzw. deren Phosphorsäure-Umsetzungsprodukte in Kombination mit Phosphinaten eine deutlich bessere Flammschutzwirkung zeigen als die bereits bekannten Kombinationen mit den niedermolekularen Melaminderivaten wie Melamincyanurat oder Melaminphosphat.

Mischungen von Kondensationsprodukten des Melamins bzw. Melamin-Phosphorsäure-Umsetzungsprodukten mit Phosphinaten weisen eine stärkere synergistische Wirkung auf und bieten damit einen effektiveren Flammschutz für thermoplastische Polymere, insbesondere Polyamide, Polyester und PPE/HIPS-Blends, als die Phosphinate alleine bzw. als die bereits in PCT/EP97/01664 sowie DE-A-197 34 437 und DE-A-197 37 727 beschriebenen Mischungen.

Zusätzlich wurde gefunden, daß die erfindungsgemäßen Kombinationen in Polyestern bessere Verarbeitungseigenschaften haben, indem sie den Polyester bei der Einarbeitung des Flammschutzmittels deutlich weniger abbauen als die bereits aus dem Stand der Technik her bekannten Kombinationen von Phosphinaten mit Melaminderivaten.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Besonders bevorzugt handelt es sich bei der Komponente B um MelaminPolyphosphate mit Kettenlängen > 2, insbesondere > 10.
Die Erfindung betrifft auch die Verwendung der erfindungsgemäßen Flammschutzmittel-Kombination zur flammfesten Ausrüstung von thermoplastischen Polymeren.

Unter thermoplastischen Polymeren werden laut Hans Domininghaus in "Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI). Polystyrol-HI ist ein Polystyrol mit erhöhter Schlagzähigkeit.

Besonders bevorzugte thermoplastische Polymere sind Polyamide, Polyester und PPE/HIPS Blends.

Thermoplastische Polymere, die die erfindungsgemäßen Flammschutzmittel-Kombinationen und gegebenenfalls Füll- und Verstärkungsstoffe und/oder andere Zusätze, wie unten definiert, enthalten, werden im folgenden als Kunststoff-Formmassen bezeichnet.

Bevorzugt werden für die genannte Verwendung die Komponenten A und B unabhängig voneinander jeweils in einer Konzentration von 1 bis 30 Gew.-%, bezogen auf die Kunststoff-Formmasse, eingesetzt.

Bevorzugt werden für die genannte Verwendung die Komponenten A und B unabhängig voneinander jeweils in einer Konzentration von 3 bis 20 Gew.-%, bezogen auf die Kunststoff-Formmasse, eingesetzt.

Bevorzugt werden für die genannte Verwendung die Komponenten A und B unabhängig voneinander jeweils in einer Konzentration von 3 bis 15 Gew.-%, bezogen auf die Kunststoff-Formmasse, eingesetzt.

Die Erfindung betrifft schließlich auch eine flammfest ausgerüstete Kunststoff-Formmasse, enthaltend die erfindungsgemäße Flammschutzmittel-Kombination.

Bevorzugt handelt es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI).

Besonders bevorzugt handelt es sich bei dem Polymeren der flammfest ausgerüsteten Kunststoff-Formmasse um Polyamid oder Polyester oder PPE/HIPS Blends.

Bei der Komponente B handelt es sich um Kondensationsprodukte des Melamins oder Umsetzungsprodukte des Melamins mit Phosphorsäure oder um Umsetzungsprodukte von Kondensationsprodukten des Melamins mit Phosphorsäure sowie Gemische der genannten Produkte.

Kondensationsprodukte des Melamins sind z. B. Melem, Melam oder Melon sowie auch die höher kondensierten Verbindungen dieses Typs und Gemische derselben. Sie können beispielsweise durch das in der PCT/WO 96/16948 beschriebene Verfahren hergestellt werden.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat und die gemischte Polysalze, wie sie z. B. in der WO 98/39306 beschrieben sind.

Die vorgenannten Verbindungen sind bereits aus der Literatur bekannt und können auch durch andere Verfahren als durch die direkte Umsetzung mit Phosphorsäure hergestellt werden. Melaminpolyphosphat kann zum Beispiel entsprechend PCT/WO 98/45364 durch die Umsetzung von Polyphosphorsäure und Melamin oder auch entsprechend PCT/WO 98/08898 durch die Kondensation von Melaminphosphat bzw. Melaminpyrophosphat hergestellt werden.

Die thermoplastischen Polymere, in denen die erfindungsgemäßen Flammschutzmittel-Kombinationen wirksam eingesetzt werden können, sind in der internationalen Patentanmeldung PCT/WO 97/01664 beschrieben.

Hierzu gehören:
1. Polymere von Mono- und Diolefinen, beispielsweise Polypropylen, Polyisobutylen, Polybutylen, Polybuten-1, Polyisopropren oder Polybutadien sowie Polymerisate von Cycloolefinen wie etwa von Cyclopenten oder von Norbornen; ferner Polyethylen, welches gegebenefalls vernetzt sein kann; z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
2. Mischungen der vorgenannten Polymere, beispielsweise Mischungen von Polypropylen mit Polyisobutylen, Polypropylen mit Polyethylen (z.B: PP/HDPE, PP/LDP) und Mischungen verschiedener Polyethylentypen wie etwa LDPE/HDPE.
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere etc. Ferner Ethylen-Alkylacrylat-Copolymere, EthylenVinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit den unter 1. genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere, und alternierend oder statistisch aufgebaute Polyalkylen/Kohlenstoffmonoxid-Copolymere und deren Mischungen mit anderen Polymeren wie z.B Polyamiden.
4. Polystyrol, Poly(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methycrylat; Mischungen von hoher Schlagzähigkeit aus Styrol-Copolymeren und einem anderen Polymer, wie z.B. einem Polyacrylat, einem Dien-polymeren oder einem Ethylen-Propylen-Dien-Terpolymeren; sowie Block-Copolymere des Styrols wie z.B. Styrol-Butadien-Styrol, Styrol-Isopren-Styrol, Styrol-Ethylen/Butylen-Styrol oderStyrol-Ethylen/Propylen-Styrol.
6. Propfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (oder Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien, Styrol und Maleinsäureimid auf Polybutadien; Styrol und Alkylacrylate bzw. Alkylmethacrylate auf Polybutadien; Styrol und Acrylnitril auf Ethylen-Propylen-Dien-Terpolymeren; Styrol und Acrylnitril auf Polyalkylacrylaten oder Polyalkylmethacrylaten; Styrol und Acrylnitril auf Acrylat-Butadien-Copolymere, sowie deren Mischungen mit den unter 5. geannten Polymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, mit Butylacrylate schlagzäh modifizierte Polymethylmethacrylate, Polyacrylamide und Polyacrylnitrile.
9. Copolymere der unter 8. genannten Monomere untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, - benzoat, -maleat, Polyvinylbutyral, Polyallylphthalat, Polyallylmelamin; sowie deren Copolymere mit den unter 1. genannten Olefinen.
11. Polyacetale, wie Polyoxymethylen, sowie solche Polyoxymethylene, die Comonomere, wie z.B. Ethylenoxid enthalten; Polyacetale, die mit thermoplastischen Polyurethanen, Acrylaten oder MBS modifiziert sind.
12. Polyphenylenoxide und -sulfide und deren Mischungen mit Styrolpolymeren oder Polyamiden.
13. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide hergestellt aus Hexamethylendiamin und Iso- und/oder Terephthalsäure und gegebenenfalls einem Elastomer als Modifikator, z.B. Poly-2,4,4-trimethylhexamethylen-terephthalamid oder Poly-m-phenylen-isophthalamid. Block-Copolymere der vorgenannten Polyamide mit Polyolefinen, Olefin-Copolymeren, lonomeren, oder chemisch gebundenen oder gepropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").
14. Polyharnstoffe, Polyimide, Polyamidimide, Polyetherimide, Polyesterimide, Polyhydantoine und Polybenzimidazole.
15. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
16. Polycarbonate und Polyestercarbonate.
17. Polysulfone, Polyethersulfone und Polyetherketone.
18. Mischungen (Polyblends) der vorgenannten Polymere, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere.

Im folgenden umfaßt der Begriff "Phosphinsäuresalz" Salze der Phosphin- und Diphosphinsäuren und deren Polymere.

Die Phosphinsäuresalze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure und Diphenylphosphinsäure.

Die Salze der Phosphinsäuren gemäß der Erfindung können nach bekannten Methoden hergestellt werden, wie sie beispielsweise in der EP-A-0 699 708 näher beschrieben sind. Die Phosphinsäuren werden dabei beispielsweise in wäßriger Lösung mit Metallcarbonaten, Metallhydroxiden oder Metalloxiden umgesetzt.

Die Menge des den Polymeren zuzusetzenden Phosphinsäuresalzes kann innerhalb weiter Grenzen variieren, Im allgemeinen verwendet man 1 bis 30 Gew.-%, bezogen auf die Kunststoff-Formmasse. Die optimale Menge hängt von der Natur des Polymeren und der Art der Komponenten B und vom Typ des eingesetzten Phosphinsäuresalzes selbst ab. Bevorzugt sind 3 bis 20 Gew.-%, insbesondere 3 bis 15 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze beispielsweise zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die Menge der den Polymeren zuzusetzenden erfindungsgemäßen Melamin-Kondensationsprodukte oder -Phosphorsäure-Umsetzungsprodukte (Komponente B) kann ebenfalls innerhalb weiter Grenzen variieren. Im allgemeinen verwendet man 1 bis 30 Gew.-%, bezogen auf die Kunststoff-Formmasse. Die optimale Menge hängt von der Natur des Polymeren, der Art des eingesetzten Phosphinsäuresalzes (Komponente A) und der Art des eingesetzten Melamin-Kondensationsprodukts, der Art der eingesetzten Umsetzungsprodukte des Melamins mit Phosphorsäure bzw. der Art der eingesetzten Umsetzungsprodukte von Kondensationsprodukten des Melamins mit Phosphorsäure (Komponente B) ab. Bevorzugt sind 3 bis 20, insbesondere 3 bis 15 Gew.-%.

Die flammhemmenden Komponenten A und B können in thermoplastische Polymere eingearbeitet werden, indem etwa alle Bestandteile als Pulver und/oder Granulat in einem Mischer vorgemischt und anschließend in einem Compoundieraggregat (z. B. einem Doppel-schneckenextruder) in der Polymerschmelze homogenisiert werden. Die Schmelze wird üblicherweise als Strang abgezogen, gekühlt und granuliert. Die Komponenten A und B können auch separat über eine Dosieranlage direkt in das Compoundieraggregat eingebracht werden.

Es ist ebenso möglich, die flammhemmenden Komponenten A und B einem fertigen Polymergranulat bzw. -pulver beizumischen und die Mischung direkt auf einer Spritzgußmaschine zu Formteilen zu verarbeiten.
Bei Polyestern beispielsweise können die flammhemmenden Zusätze A und B auch bereits während der Polykondensation in die Polyestermasse gegeben werden.

Den Formmassen können neben der erfindungsgemäßen flammhemmenden Kombination aus A und B auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-584 567 angegeben.

Die flammwidrigen Kunststoff-Formmassen eignen sich zur Herstellung von Formkörpern, Filmen, Fäden und Fasern, beispielsweise durch Spritzgießen, Extrudieren oder Verpressen.

### Beispiele

### 1. Eingesetzte Komponenten

Handelsübliche Polymere (Granulate):

| | |
|---|---|
| Polyamid 6 (PA 6-GV): | ^{®}Durethan BKV 30 (Fa. Bayer AG, D) enthält 30 % Glasfasern. |
| Polyamid 6.6 (PA 6.6-GV): | ^{®}Durethan AKV 30 (Fa. Bayer AG, D) enthält 30 % Glasfasern. |
| Polybutylenterephthalat (PBT-GV): | ^{®}Celanex 2300 GV1/30 (Fa. Ticona, D) enthält 30 % Glasfasern. |
| PPE/HIPS Blend: | ^{®}Noryl N110 (Fa. GE Plastics, NL). |

Flammschutzmittelkomponenten (pulverförmig):
Komponente A:
   Aluminiumsalz der Diethylphosphinsäure, im folgenden als DEPAL bezeichnet.
Komponente B:
   Melapur^{®} MC (Melamincyanurat), Fa. DSM Melapur, NL
   Melapur^{®} MP (Melaminphosphat), Fa. DSM Melapur, NL
   Melapur 200 (Melaminpolyphosphat), Fa. DSM Melapur, NL

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 240 bis 280 °C (PA 6-GV bzw. PBT-GV) bzw. von 260 °C bis 300 °C (PA 6.6-GV bzw. PPE/HIPS) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 260 bis 280 °C (PA 6-GV bzw. PBT-GV) bzw. von 270 °C bis 300 °C (PA 6.6-GV bzw. PPE/HIPS) zu Prüfkörpern verarbeitet und anhand des UL 94-Tests (Underwriter Laboratories) auf Flammwidrigkeit geprüft und klassifiziert.

Die Verarbeitungseigenschaften der erfindungsgemäßen Kombinationen in Polyester wurden anhand der Spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Tabelle 1 zeigt Vergleichsbeispiele, in denen das Aluminiumsalz der Diethylphosphinsäure (DEPAL) bzw. das Zinksalz der Diethylphosphinsäure bzw. Melaminpolyphosphat als alleinige Flammschutzmittelkomponenten in glasfaserverstärktem PA 6, PA 6.6, PBT bzw. in PPE/HIPS geprüft wurden.

Tabelle 2 zeigt Vergleichsbeispiele, in denen das Aluminiumsalz der Diethylphosphinsäure in Kombination mit stickstoffhaltigen Synergisten, wie in der PCT/WO 97/01664 beschrieben, in glasfaserverstärktem PA 6, PA 6.6, PBT bzw. in PPE/HIPS geprüft wurden

Die Ergebnisse der Beispiele, in denen die Flammschutzmittel-Kombination gemäß der Erfindung eingesetzt wurden, sind in Tabelle 3 aufgelistet. Alle Mengen sind als Gew.-% angegeben und beziehen sich auf die Kunststoff-Formmasse einschließlich der Flammschutzmittel-Kombination.

Aus den Beispielen geht hervor, daß die erfindungsgemäßen Zusätze (Komponente B) in der Kombination mit Metallsalzen der Phosphinsäuren eine eindeutige Steigerung des Flammschutzeffekts bewirken, wenn sie in entsprechenden Mengen zugemischt werden. Die Flammschutzmittelmenge bezogen auf die Kunststoff-Formmasse, die nötig ist, um eine V-0, V-1 bzw. V-2 Einstufung zu erreichen, kann in der Kombination A+B gegenüber A bzw. B allein und auch gegenüber der Kombination A+ stickstoffhaltige Synergisten, wie in PCT/WO 97/01664 beschrieben, deutlich verringert werden.

Die Einsatzmenge an Flammschutzmittel zum Erreichen einer bestimmten Brandklasse kann somit erheblich reduziert werden, was sich sowohl positiv auf die mechanische Charakteristik der Kunststoff-Formmasse auswirkt als auch ökologische sowie ökonomische Vorteile mit sich bringt.

In Polyester zeichnet sich die erfindungsgemäße Kombination zudem durch eine bessere Verträglichkeit während der Einarbeitung aus als die Kombination A + stickstoffhaltige Synergisten, wie in PCT/WO 97/01664 beschrieben.

**Tabelle 1: Vergleichsbeispiele**

| Phosphinate (Komponente A) bzw. Melaminpolyphosphat (Komponente B) jeweils allein in glasfaserverstärktem PBT, PA 6, PA 6.6 bzw. in PPE/HIPS. | | | |
|---|---|---|---|
| Polymer | DEPAL [%] | Melaminpolyphosphat [%] | Klasse nach UL 94 (1,6 mm) |
| PBT-GV | 20 | | V-1 |
| PBT-GV | | 20 | V-2 |
| PA 6-GV | 20 | | V-2 |
| PA 6-GV | | 20 | n.k. ^{*)} |
| PA 6.6-GV | 20 | | n.k. ^{*)} |
| PA 6.6-GV | 25 | | n.k. ^{*)} |
| PA 6.6.-GV | | 20 | V-2 |
| PPE/HIPS | 20 | | V-1 |
| PPE/HIPS | | 20 | V-2 |

| | | | |
|---|---|---|---|
| ^{*)} n.k. = nicht klassifizierbar | | | |

**Tabelle 2: Vergleichsbeispiele**

| Phosphinate (Komponente A) in Kombination mit stickstoffhaltigen Synergisten in glasfaserverstärktem PBT, PA 6, PA 6.6 bzw. in PPE/HIPS. | | | | | |
|---|---|---|---|---|---|
| Polymer | DEPAL [%] | Melamincyanurat [%] | Melaminphosphat [%] | Klasse nach UL 94 (1,6 mm) | SV-Zahl |
| PBT-GV | 10 | | 10 | V-2 | 323 |
| PA 6-GV | 10 | | 10 | V-1 | |
| PA 6.6-GV | 20 | 10 | | n.k.^{*)} | |
| PPE/HIPS | 10 | 10 | | V-1 | |

| | | | | | |
|---|---|---|---|---|---|
| ^{*)} n.k. = nicht klassifizierbar | | | | | |

**Tabelle 3: Erfindung**

| Phosphinate (Komponente A) in Kombination mit Melaminpolyphosphat (Komponente B) in glasfaserverstärktem PBT, PA 6, PA 6.6 bzw. in PPE/HIPS. | | | | |
|---|---|---|---|---|
| Polymer | DEPAL [%] | Melaminpolyphosphat [%] | Klasse nach UL 94 (1,6 mm) | SV-Zahl |
| PBT-GV | 10 | 10 | V-0 | 488 |
| PA 6-GV | 10 | 5 | V-0 | |
| PA 6.6-GV | 8 | 4 | V-0 | |
| PA 6.6-GV | 10 | 5 | V-0 | |
| PPE/HIPS | 7,5 | 7,5 | V-1 | |
| PPE/HIPS | 9 | 9 | V-0 | |

## Patentansprüche

1. Flammschutzmittel-Kombination, enthaltend als Komponente A ein Phosphinsäuresalz der Formel (I) und/oder ein Diphosphinsäuresalz der Formel (II) und/oder deren Polymere, 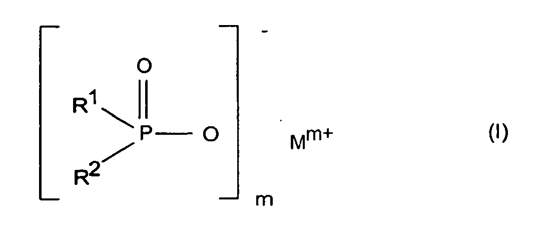 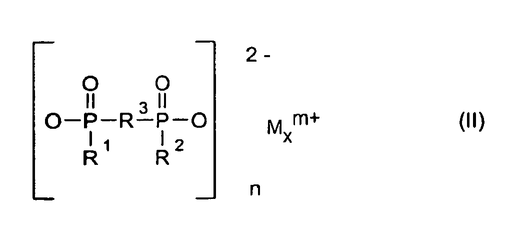 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder-Arylalkylen;
M Calcium-, Magnesium- und/oder Aluminium-Ionen,
m 2 oder 3;
n 1 oder 3;
x 1 oder 2
bedeuten, und als Komponente B Kondensationsprodukte des Melamins und/oder Umsetzungsprodukte des Melamins mit Phosphorsäure und/oder Umsetzungsprodukte von Kondensationsprodukten des Melamins mit Phosphorsäure und/oder Gemische davon, wobei es sich bei den Kondensationsprodukten des Melamins um Melem, Melam, Melon und/oder höherkondensierte Verbindungen davon handelt und es sich bei den Umsetzungsprodukten um Dimelaminpyrophosphat, Melaminpolyphosphat, Melempolyphosphat, Melampolyphosphat und/oder gemischte Polysalze dieses Typs handelt.

2. Flammschutzmittel-Kombination nach Anspruch 1, **dadurch gekennzeichnet, daß** R¹, R² gleich oder verschieden sind und Methyl, Ethyl, n-Propyl, iso-Propyl, n-Butyl, tert.-Butyl, n-Pentyl und/oder Phenyl bedeuten.

3. Flammschutzmittel-Kombination nach Anspruch 1 oder 2, **dadurch gekennzeichnet, daß** R³ Methylen, Ethylen, n-Propylen, iso-Propylen, n-Butylen, tert.-Butylen, n-Pentylen oder n-Octylen bedeutet.

4. Flammschutzmittel-Kombination nach Anspruch 1 oder 2, **dadurch gekennzeichnet, daß** R³ Phenylen oder Naphthylen bedeutet.

5. Flammschutzmittel-Kombination nach Anspruch 1 oder 2, **dadurch gekennzeichnet, daß** R³ Methyl-phenylen, Ethyl-phenylen, tert.-Butylphenylen, Methylnaphtthylen, Ethyl-naphthylen oder tert.-Butylnaphthylen bedeutet.

6. Flammschutzmittel-Kombination nach Anspruch 1 oder 2, **dadurch gekennzeichnet, daß** R³ Phenyl-methylen, Phenyl-ethylen, Phenyl-propylen oder Phenyl-butylen bedeutet.

7. Flammschutzmittel-Kombination nach einem oder mehreren der Ansprüche 1 bis 6, **dadurch gekennzeichnet, daß** es sich bei der Komponente B um Melaminpolyphosphat handelt.

8. Verwendung einer Flammschutzmittel-Kombination gemäß einem oder mehreren der Ansprüche 1 bis 7 zur flammfesten Ausrüstung von thermoplastischen Polymeren.

9. Verwendung nach Anspruch 8, **dadurch gekennzeichnet, daß** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-H1) handelt.

10. Verwendung nach Anspruch 9, **dadurch gekennzeichnet, daß** es sich bei den thermoplastischen Polymeren um Polyamid, Polyester und PPE/HIPS-Blends handelt.

11. Verwendung einer Flammschutzmittel-Kombination gemäß einem oder mehreren der Ansprüche 8 bis 10, **dadurch gekennzeichnet, daß** die Komponenten A und B unabhängig voneinander jeweils in einer Konzentration von 1 bis 30 Gew.-%, bezogen auf die Kunststoff-Formmasse, eingesetzt werden.

12. Verwendung einer Flammschutzmittel-Kombination gemäß einem oder mehreren der Ansprüche 8 bis 10, **dadurch gekennzeichnet, daß** die Komponenten A und B unabhängig voneinander jeweils in einer Konzentration von 3 bis 20 Gew.-%, bezogen auf die Kunststoff-Formmasse, eingesetzt werden.

13. Verwendung einer Flammschutzmittel-Kombination gemäß einem oder mehreren der Ansprüche 8 bis 10, **dadurch gekennzeichnet, daß** die Komponenten A und B unabhängig voneinander jeweils in einer Konzentration von 5 bis 15 Gew.-%, bezogen auf die Kunststoff-Formmasse, eingesetzt werden.

14. Flammfest ausgerüstete Kunststoff-Formmasse, enthaltend eine Flammschutzmittel-Kombination gemäß einem oder mehreren der Ansprüche 1 bis 7.

15. Flammfest ausgerüstete Kunststoff-Formmasse gemäß Anspruch 14, **dadurch gekennzeichnet, daß** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

16. Flammfest ausgerüstete Kunststoff-Formmasse gemäß Anspruch 14 oder 15,
**dadurch gekennzeichnet, daß** es sich bei dem Kunststoff um Polyamide, Polyester und PPE/HIPS-Blends handelt.

## Claims

1. A flame retardant combination comprising, as component A, a phosphinate of the formula (I) and/or a diphosphinate of the formula (II) and/or polymers of these 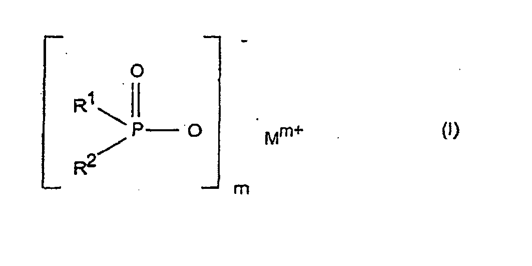 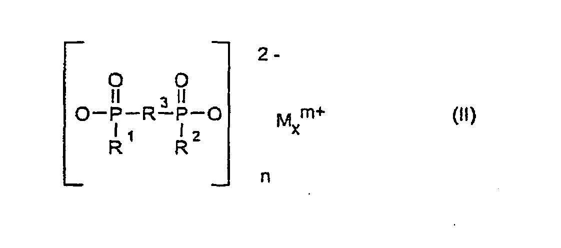 where
R¹ and R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is calcium ions, magnesium ions, and/or aluminum ions,
m is 2 or 3;
n is 1 or 3;
x is 1 or 2,
and comprising, as component B, condensation products of melamine and/or reaction products of melamine with phosphoric acid and/or reaction products of condensation products of melamine with phosphoric acid and/or comprising a mixture of these, where the condensation products of melamine are melem, melam, melon and/or more highly condensed compounds thereof, and the reaction products are dimelamine pyrophosphate, melamine polyphosphate, melem polyphosphate, melam polyphosphate, and/or mixed polysalts of this type.

2. A flame retardant combination as claimed in claim 1, wherein R¹ and R² are identical or different and are methyl, ethyl, n-propyl, isopropyl, n-butyl, tert-butyl, n-pentyl and/or phenyl.

3. A flame retardant combination as claimed in claim 1 or 2, wherein R³ is methylene, ethylene, n-propylene, isopropylene, n-butylene, tert-butylene, n-pentylene, or n-octylene.

4. A flame retardant combination as claimed in claim 1 or 2, wherein R³ is phenylene or naphthylene.

5. A flame retardant combination as claimed in claim 1 or 2, wherein R³ is methylphenylene, ethylphenylene, tert-butylphenylene, methylnaphthylene, ethylnapthylene or tert-butylnaphthylene.

6. A flame retardant combination as claimed in claim 1 or 2, wherein R³ is phenylmethylene, phenylethylene, phenylpropylene or phenylbutylene.

7. A flame retardant combination as claimed in one or more of claims 1 to 6, wherein component B is melamine polyphosphate.

8. The use of a flame retardant combination as claimed in one or more of claims 1 to 7 for rendering thermoplastic polymers flame retardant.

9. The use as claimed in claim 8, wherein the thermoplastic polymers are HIPS (high-impact polystyrene), polyphenylene ethers, polyamides, polyesters, polycarbonates or blends or polymer blends of the type ABS (acrylonitrile-butadiene-styrene) or PC/ABS (polycarbonate/acrylonitrilebutadiene-styrene) or PPE/HIPS (polyphenylene ether/high-impact polystyrene).

10. The use as claimed in claim 9, wherein the thermoplastic polymers are polyamide, polyester or blends of PPE/HIPS.

11. The use of a flame retardant combination as claimed in one or more of claims 8 to 10, wherein each of the components A and B, independently of one another, is used at a concentration of from 1 to 30% by weight, based on the plastic molding composition.

12. The use of a flame retardant combination as claimed in one or more of claims 8 to 10, wherein each of the components A and B, independently of one another, is used at a concentration of from 3 to 20% by weight, based on the plastic molding composition.

13. The use of a flame retardant combination as claimed in one or more of claims 8 to 10, wherein each of the components A and B, independently of one another, is used at a concentration of from 5 to 15% by weight, based on the plastic molding composition.

14. A flame-retardant plastic molding composition comprising a flame retardant combination as claimed in one or more of claims 1 to 7.

15. A flame-retardant plastic molding composition as claimed in claim 14, wherein the plastic is thermoplastic polymers of the type HIPS (high-impact polystyrene), polyphenylene ethers, polyamides, polyesters, polycarbonates or blends or polymer blends of the type ABS (acrylonitrile-butadiene-styrene) or PC/ABS (polycarbonate/ acrylonitrile-butadiene-styrene) or PPE/HIPS (polyphenylene ether/high-impact polystyrene) plastics.

16. A flame-retardant plastic molding composition as claimed in claim 14 or 15, wherein the plastic is polyamides, polyesters or blends of PPE/HIPS.

## Revendications

1. Combinaison d'agents ignifuges comprenant, en tant que composant A, un sel d'acide phosphinique de formule (I) et/ou un sel d'acide diphosphinique de formule (II) et/ou leurs polymères, 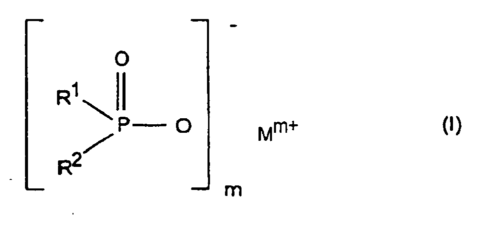 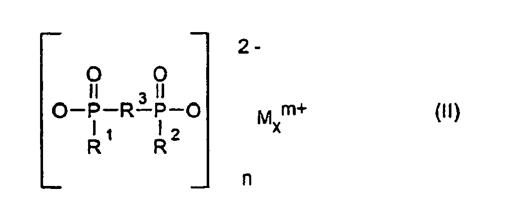 dans lesquelles
R¹, R² sont identiques ou différents et représentent un groupe alkyle en C₁ à C₆, linéaire ou ramifié, et/ou un groupe aryle ;
R³ représente un groupe alkylène en C₁ à C₁₀, linéaire ou ramifié, un groupe arylène, alkylarylène ou arylalkylène en C₆ à C₁₀ ;
M représente des ions calcium, magnésium et/ou aluminium,
m vaut 2 ou 3 ;
n vaut 1 ou 3 ;
x vaut 1 ou 2
et, en tant que composant B, des produits de condensation de la mélamine et/ou des produits de la réaction de la mélamine avec l'acide phosphorique et/ou des produits de la réaction de produits de condensation de la mélamine avec l'acide phosphorique et/ou des mélanges de ceux-ci, dans lequel, les produits de condensation de la mélamine sont le melem, le melam, le melon et/ou des composés plus fortement condensés et les produits de réaction sont le pyrophosphate de dimélamine, le polyphosphate de mélamine, le polyphosphate de melem, le polyphosphate de melame et/ou des polysels mixtes de ce type.

2. Combinaison d'agents ignifuges selon la revendication 1, **caractérisée en ce que** R¹, R² sont identiques ou différents et représentent un groupe méthyle,éthyle, n-propyle, iso-propyle, n-butyle, tert-butyle, n-pentyle et/ou phényle.

3. Combinaison d'agents ignifuges selon la revendication 1 ou 2, **caractérisée en ce que** R³ représente un groupe méthylène, éthylène, n-propylène, iso-propylène, n-butylène, tert-butylène, n-pentylène ou n-octylène.

4. Combinaison d'agents ignifuges selon la revendication 1 ou 2, **caractérisée en ce que** R³ représente un groupe phénylène ou naphtylène.

5. Combinaison d'agents ignifuges selon la revendication 1 ou 2, **caractérisée en ce que** R³ représente un groupe méthyl-phénylène, éthyl-phénylène, tert-butylphényle, methyl-naphtyle, éthyl-naphtylène ou tert-butylnaphtyle.

6. Combinaison d'agents ignifuges selon la revendication 1 ou 2, **caractérisée en ce que** R³ représente un groupe phényl-méthylène, phényl-éthylène, phényl-propylène ou phényl-butylène.

7. Combinaison d'agents ignifuges selon l'une quelconque ou plusieurs des revendications de 1 à 6, **caractérisée en ce que** le composant B est le polyphosphate de mélamine.

8. Utilisation d'une combinaison d'agents ignifuges selon l'une quelconque ou plusieurs des revendications de 1 à 7 pour l'apprêtage ignifuge de polymères thermoplastiques.

9. Utilisation selon la revendication 8, **caractérisée en ce que** les polymères thermoplastiques sont le polystyrène-HI (High-Impact), le poly (éther de phénylène), un polyamide, un polyester, un polycarbonate et des mélanges ou des mélanges de polymères du type ABS (acrylonitrile-butadiène-styrène) ou PC/ABS (polycarbonate/acrylonitrile-butadiène-styrène) ou PPE/HIPS (poly (éther de phénylène)/polystyrène-HI).

10. Utilisation selon la revendication 9, **caractérisée en ce que** les polymères thermoplastiques sont le polyamide, le polyester et des mélanges PPE/HIPS.

11. Utilisation d'une combinaison d'agents ignifuges selon l'une quelconque ou plusieurs des revendications de 8 à 10, **caractérisée en ce que** les composants A et B sont utilisés indépendamment l'un de l'autre à chaque fois dans une concentration de 1% à 30% en poids, par rapport à la matière moulable de matière plastique.

12. Utilisation d'une combinaison d'agents ignifuges selon l'une quelconque ou plusieurs des revendications de 8 à 10, **caractérisée en ce que** les composants A et B sont utilisés indépendamment l'un de l'autre à chaque fois dans une concentration de 3% à 20% en poids, par rapport à la matière moulable de matière plastique.

13. Utilisation d'une combinaison d'agents ignifuges selon l'une quelconque ou plusieurs des revendications de 8 à 10, **caractérisée en ce que** les composants A et B sont utilisés indépendamment l'un de l'autre à chaque fois dans une concentration de 5% à 15% en poids, par rapport à la matière moulable de matière plastique.

14. Matière moulable de matière plastique ignifugée, comprenant une combinaison d'agents ignifuges selon l'une quelconque ou plusieurs des revendications de 1 à 7.

15. Matière moulable de matière plastique ignifugée selon la revendication 14, **caractérisée en ce que** la matière plastique est un polymère thermoplastique du type polystyrène-HI (High-Impact), le poly(éther de phénylène), un polyamide, un polyester, un polycarbonate et des mélanges ou des mélanges de polymères du type ABS (acrylonitrile-butadiène-styrène) ou PC/ABS (polycarbonate/acrylonitrile-butadiène-styrène) ou PPE/HIPS (poly(éther de phénylène)/polystyrène-HI).

16. Matière moulable de matière plastique ignifugée selon la revendication 14 ou 15, **caractérisée en ce que** la matière plastique est un polyamide, un polyester et des mélanges PPE/HIPS.
